# DEMANDE DE BREVET EUROPEEN

(11) **EP 1 462 304 A1**
(43) Date de publication de la demande: **29.09.2004**
(21) Numéro de dépôt: 04290810.3
(22) Date de dépôt: 26.03.2004
(51) Int. Cl.: B60N 2/60

(54) **Housse de siège**

(30) Priorité: 28.03.2003 FR 0303853
(71) Demandeur: Metalplast, 75017 Paris (FR)
(72) Inventeur: Dezarnaud, Michel, 92200 Neuilly Sur Seine (FR)
(74) Mandataire: Bloch, Gérard

(57) **Abrégé**

La housse (1) de l'invention se présente en une seule partie et comporte une portion (2) destinée à recouvrir le dossier d'un siège, et une portion (3) destinée à recouvrir l'assise du siège. Elle comprend en outre une bande de rétention (70, 70') agencée pour s'étendre sous l'assise du siège afin de maintenir la housse sur le siège. Des fermetures à glissières ((40, 41), (40', 41')) permettent la mise en forme de la housse sur le siège et viennent également fermer la bande de rétention (70, 70').

## Description

La présente invention concerne une housse de siège.

Un siège comporte au moins une assise et un dossier. Une housse de siège est utilisée pour recouvrir un siège, par exemple un siège de véhicule automobile, afin de le protéger du contact avec l'usager du siège ou du dépôt d'éléments extérieurs, comme de la poussière ou des détritus, pouvant occasionner une usure rapide du siège.

Cet exemple de siège de véhicule automobile n'est pas limitatif du problème que s'est posé la demanderesse.

Une housse est généralement conformée de façon à épouser la forme extérieure du siège, au moins sur les parties supérieure et latérales de l'assise et sur les parties avant et latérales du dossier. La housse peut se présenter en une seule partie ou en deux parties, une pour l'assise et une pour le dossier. La housse comporte en général également des moyens de maintien, situés au pourtour de moyens de couverture, afin de retenir la housse sur le siège. Ces moyens de maintien se présentent souvent sous la forme de liens élastiques cousus de place en place et formant des boucles munies de crochets, ces derniers coopérant entre eux ou avec des moyens d'ancrage du siège pour maintenir la housse en position. Ils peuvent aussi se présenter sous la forme d'un lien élastique discontinu s'étendant au pourtour des moyens de couverture, ce lien comportant des moyens d'accroche qui viennent en prise les uns avec les autres afin d'assurer la tension du lien élastique et le maintien de la housse sur le siège. Le lien élastique ne peut être continu en raison des obstacles que présentent les sièges de véhicules automobiles.

Toutefois, dans toutes les solutions proposées jusqu'à maintenant, l'utilisateur de la housse doit, après l'avoir enfilée sur le siège, fixer les moyens d'accroche. Les opérations d'enfilage de la housse et de fixation des moyens d'accroche s'avèrent souvent fastidieuses, décourageant l'utilisateur de changer régulièrement la housse pour la laver, par exemple.

La présente invention vise à simplifier l'enfilage de la housse et à supprimer l'opération d'accrochage de moyens discrets d'accroche, comme des crochets, des boutons-pression, ... et ainsi à faciliter la pose de la housse sur le siège.

A cet effet, la présente invention concerne une housse de siège en une seule partie, comportant une portion permettant de recouvrir au moins la partie supérieure et les parties latérales de l'assise du siège, et une portion permettant de recouvrir au moins la partie avant, la partie arrière et les parties latérales du dossier du siège, comportant une bande élastique de rétention, de la housse sur le siège, agencée pour s'étendre sous l'assise du siège, et des moyens de mise en forme et de fermeture de la housse qui viennent également fermer la bande élastique de rétention.

De préférence, les moyens de mise en forme et de fermeture de la housse s'étendent sensiblement le long des portions de housse destinées à couvrir les parties latérales du siège.

De préférence encore, les moyens de mise en forme et de fermeture de la housse comportent au moins une fermeture à glissière.

Avantageusement, la fermeture à glissière s'étend de façon sensiblement rectiligne, dans la direction que suit sensiblement la portion latérale qui la soutient, depuis le sommet de la housse jusqu'au bas.

Avantageusement encore, au moins l'une des portions destinées à recouvrir le dossier et l'assise du siège possède un bourrelet destiné à être coincé entre le dossier et l'assise du siège.

Eventuellement, les parties de la housse destinées respectivement à recouvrir l'assise et le dossier du siège sont reliées l'une à l'autre de façon détachable.

L'invention sera mieux comprise à l'aide de la description suivante de la forme de réalisation préférée de la housse de l'invention, en référence au dessin annexé, sur lequel :
- la figure 1 représente une vue en perspective éclatée de la housse de l'invention ;
- la figure 2 représente une vue en perspective de côté de la housse de l'invention, en position ouverte, et
- la figure 3 représente une vue en perspective de dessous de la housse de l'invention, en position fermée.

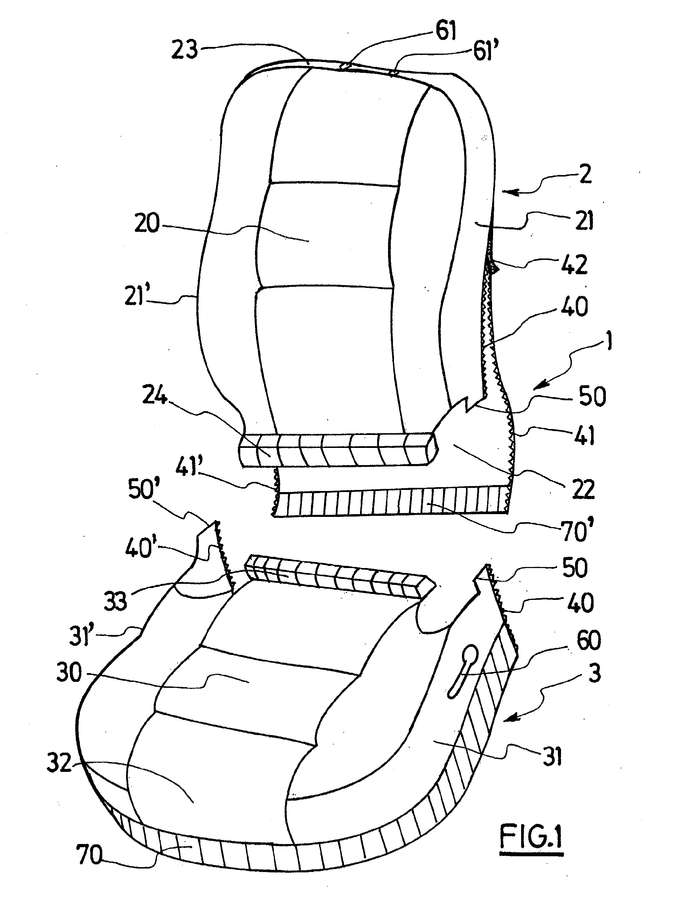

La figure 1 représente une vue en perspective éclatée de la housse de l'invention, dans laquelle les parties destinées à recouvrir respectivement le dossier et l'assise du siège ont été fictivement séparées afin de mieux dévoiler la structure de la housse. La housse se présente bien en fait en une seule partie.

En référence à la figure 1, la housse 1 de l'invention comporte fonctionnellement une partie 2 destinée à recouvrir le dossier du siège et une partie 3 destinée à recouvrir l'assise du siège. Par abus de langage, il sera dans la suite fait allusion au dossier 2 de la housse 1 et à l'assise 3 de la housse 1.

Le dossier 2 de la housse 1 comporte une face avant 20, attenante de chaque côté à deux portions latérales 21, 21' qui s'étendent, une fois la housse 1 mise en forme, sensiblement perpendiculairement à la face avant 20 afin de couvrir les portions latérales du dossier du siège. Le dessus 23 du dossier 2 de la housse 1, sensiblement perpendiculaire à la face avant 22 et aux portions latérales 21, 21', comporte deux lumières 61, 61' de passage des tubes servant à supporter l'appui-tête du siège.

A l'avant du dessus 23 du dossier 2 de la housse 1 s'étend, comme nous venons de le voir, la face avant 20 ; à l'arrière, s'étend une face arrière 22, destinée à recouvrir la face arrière du dossier du siège. La housse 1 est continue entre le sommet de la face arrière 22 et le dessus 23 du dossier 2 ; il n'en est pas de même entre les bords latéraux de la face arrière 22 et les portions latérales 21, 21'. Ainsi, le dossier 2 de la housse 1 comporte deux fermetures à glissières (40,41), (40',41') situées entre la face arrière 22 et les portions latérales 21, 21' de la housse 1.

Plus précisément, une première fermeture à glissière (40,41) se situe entre la face arrière 22 du dossier 2 de la housse 1 et une première portion latérale 21 du dossier 2, la face arrière 22 supportant une première chaîne à mailles 41 et la portion latérale 21 supportant une seconde chaîne à mailles 40. Un curseur 42 permet la fermeture de la fermeture à glissière (40,41). Le curseur 42 se situe, en position ouverte de la fermeture à glissière (40,41), dans la partie haute de la fermeture à glissière (40,41), à savoir à proximité du dessus 23 du dossier 2 de la housse 1. De même, une seconde fermeture à glissière (40',41') se situe entre la face arrière 22 du dossier 2 de la housse 1 et la seconde portion latérale 21' du dossier 2. La face arrière 23 et la portion latérale 21' supportent chacune une chaîne à maille, respectivement 41', 40', un curseur 42' non représenté sur la figure 1 permettant la fermeture de la fermeture à glissière (40',41') ; le curseur 42' se situe dans la partie haute de la fermeture (40',41') en position ouverte, à proximité du sommet 23 du dossier 2 de la housse 1.

Ces chaînes à mailles (40,41), (40',41') s'étendent de façon sensiblement rectiligne, dans la direction que suit sensiblement la paroi latérale du dossier du siège, donc que suivent sensiblement les portions latérales 21, 21' du dossier 2 de la housse 1. Elles définissent la limite arrière de ces portions latérales 21, 21'.

A l'extrémité basse de la face arrière 22 du dossier 22 s'étend une bande élastique 70'. Aux extrémités latérales de la bande élastique 70', s'étendent transversalement à la bande 70' les mailles à chaînes 41, 41' supportées par la face arrière 22 du dossier 2 de la housse 1.

Le dossier 2 comporte enfin, à l'extrémité basse de sa face avant 20, un ourlet rempli de mousse, par exemple, formant bourrelet 24, s'étendant transversalement le long de ladite extrémité basse. Ce bourrelet 24 est destiné à être coincé entre le dossier et l'assise du siège, lorsque la housse 1 est en position, afin de participer au maintien de la housse 1 sur le siège.

L'assise 3 de la housse 1 comporte une face supérieure 30, destinée à recouvrir le dessus du siège, attenante à une portion avant 32 et à deux portions latérales 31, 31', destinées à recouvrir les portions de siège correspondantes. Les portions latérales 31, 31' et la portion avant 32 sont donc sensiblement perpendiculaires à la face supérieure 30, la portion avant 32 étant sensiblement perpendiculaire aux deux portions latérales 31, 31'. Il y a continuité entre la face supérieure 30, les portions latérales 31, 31' et la portion avant 32.

Les portions latérales du dossier (21,21') et de l'assise (31,31') sont faites de la même matière. L'assise 3 est liée au dossier 2 de chaque côté par une zone de liaison 50, 50' de même matière que les portions latérales du dossier (21,21') et de l'assise (31,31'). Chaque zone de liaison 50, 50' est en fait un raccord continu entre chaque paroi latérale 31, 31' de l'assise 3 et la paroi latérale 21, 21' correspondante du dossier 2, au niveau de leur parties arrières.

A l'extrémité basse des portions avant 32 et latérales 31, 31' de l'assise 3, s'étend une bande élastique 70 continue.

A l'arrière des portions latérales 31, 31' de l'assise 3 s'étendent, en raison des zones de liaison 50, 50' entre le dossier 2 et l'assise 3 et donc de la continuité entre ces deux parties, les chaînes à maillons 40, 40' décrites précédemment. Celles-ci permettront, en cas de fermeture des fermetures à glissières (40,41), (40',41'), de joindre les portions latérales 31, 31' de l'assise 3 à la face arrière 22 du dossier 2.

En particulier, lors d'une telle fermeture, les bandes élastiques 70 et 70', conformées de même largeur, sont jointes au niveau des fermetures à glissières (40,41), (40',41'). Ainsi, lorsque la housse 1 est positionnée sur le siège, les bandes élastiques 70, 70' forment une ceinture sous le siège, qui maintient la housse 1 sur le siège en raison de la tension des bandes élastiques 70, 70'. En effet, les bandes élastiques 70, 70' sont conformées de façon à ce que, pour que les fermetures à glissières (40,41), (40',41') puissent se fermer jusqu'en bas, c'est-à-dire jusqu'au bas des bandes élastiques 70, 70', l'utilisateur doit apporter une force supplémentaire ayant pour résultat la tension des bandes élastiques 70, 70'. Cette tension des bandes élastiques 70, 70' a pour résultat de maintenir en position la housse 1 sur le siège.

A l'arrière de sa face supérieure 30, l'assise 3 de la housse comporte un ourlet rempli de mousse, par exemple, formant bourrelet 33, et s'étendant transversalement le long de cette extrémité arrière de la face supérieure. Ce bourrelet 33 est destiné à être coincé entre le dossier et l'assise du siège, lorsque la housse 1 est en position, afin de participer au maintien de la housse 1 sur le siège.

Enfin, l'assise 3 de la housse 1 comprend, sur chacune de ses portions latérales 31, une lumière 60 de passage des poignées de réglage du siège.

Nous allons maintenant décrire le montage de la housse 1 sur le siège.

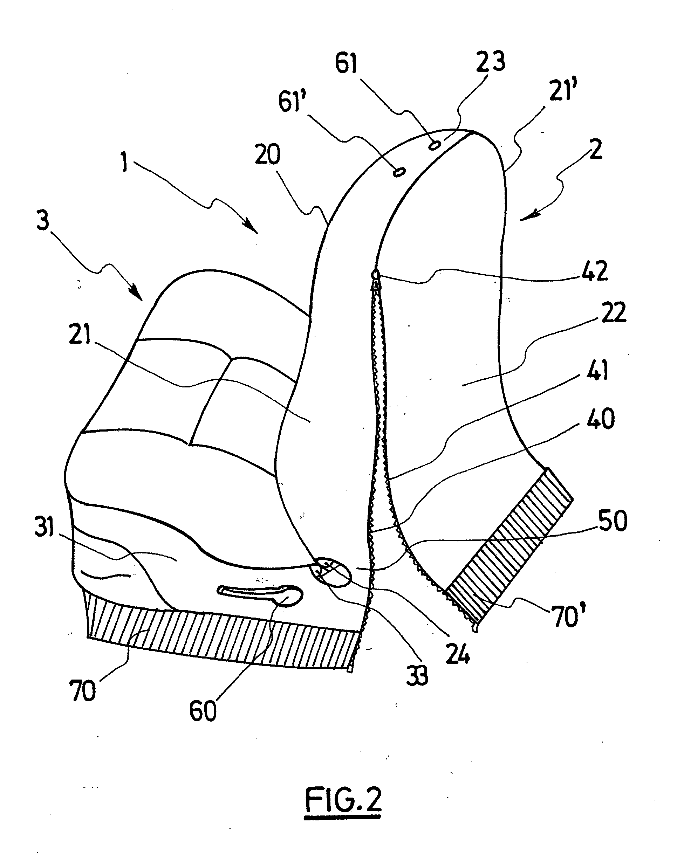

La figure 2 représente une vue en perspective de côté de la housse 1, en position ouverte, c'est-à-dire lorsque les fermetures à glissières (40,41), (40',41') sont en position ouverte, conformée en volume comme si elle était sur un siège. Il sera donc imaginé que la housse 1 de la figure 2 est sur un siège, même si ce dernier n'apparaît pas.

Afin de monter la housse 1 sur un siège, cette dernière est placée en position ouverte sur le siège. L'assise 3 est enfilée sur l'assise du siège, puis la face avant 20 et les portions latérales 21, 21' du dossier 2 sont plaquées sur le dossier du siège. Cette opération est rendue très facile du fait de la position ouverte des fermetures à glissières (40,41), (40',41') ; il suffit ensuite, éventuellement à l'aide d'une tension opérée sur la face arrière 22 du dossier 2, de placer le dessus 23 du dossier 2 sur la partie correspondante du siège, les lumières 61, 61' permettant de laisser passer les tubes de l'appui-tête du siège.

Les bourrelets 24, 33 du dossier 2 et de l'assise 3, respectivement, sont ensuite glissés entre le dossier et l'assise du siège. Ils participent ainsi au maintien de la housse 1 sur le siège, tout en facilitant la mise en forme et la tension de la housse 1 sur le siège.

Enfin, les lumières 60 au niveau des portions latérales 31, 31' de l'assise permettent le passage des poignées de réglage du siège.

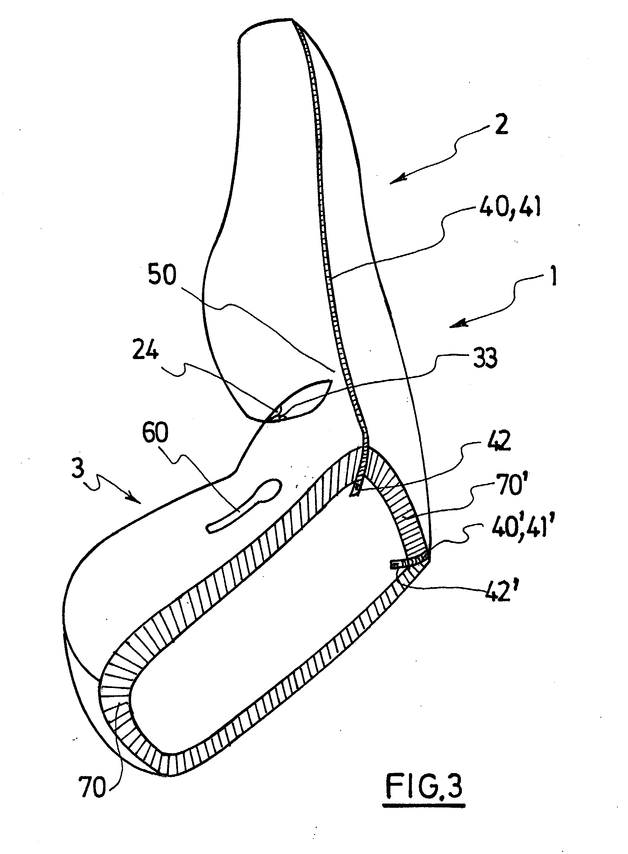

La figure 3 représente une vue en perspective de dessous de la housse en position fermée, c'est-à-dire après fermeture des fermetures à glissières (40,41), (40',41'), conformée en volume comme si elle était sur un siège. Il sera de même que précédemment imaginé que la housse 1 de la figure 2 est sur un siège, même si ce dernier n'apparaît pas.

Une fois la housse 1 enfilée sur le siège et mise en forme au niveau de l'assise 3 et de la face avant 20, des portions latérales 21, 21' et du dessus 23 du dossier 2, il est possible de fermer les fermetures à glissières (40,41), (40',41'). Par exemple, du côté gauche, le curseur 42 est descendu de façon à réunir les chaînes à mailles 40, 41 de la housse 1 ; il est effectué de même de l'autre côté. La face arrière 22 du dossier est ainsi mise en forme sur le siège, les fermetures (40,41), (40',41') permettant d'assurer la continuité entre la face arrière 22 et les portions latérales 21, 21'.

Les curseurs 42, 42' sont descendus jusqu'en bas des fermetures à glissières (40,41), (40',41'), au niveau des bandes élastiques 70, 70'. Les bandes élastiques 70, 70' sont conformées de façon à ce que l'opération consistant à fermer les fermetures à glissières (40,41), (40',41') à leur niveau demande l'apport de la part de l'utilisateur d'une force supplémentaire, du fait de la résistance des bandes élastiques 70, 70', dont le périmètre sans tension est plus petit que le périmètre correspondant au niveau du siège. Ainsi, lorsque les fermetures à glissières (40,41), (40',41') sont fermées jusqu'en bas, les bandes élastiques 70, 70' sont réunies et ne forment plus qu'une bande élastique (70, 70') sous tension. Cette nouvelle bande élastique (70, 70'), placée sous l'assise du siège, assure le maintien de la housse 1 sur le siège.

En conclusion, grâce à la conception de la housse 1 de la présente invention, il est possible de mettre la housse 1 en place de façon très simple et très rapide, la fermeture des fermetures à glissières (40,41), (40',41') permettant à la fois la mise en forme de la housse 1 sur le siège ainsi que la tension des bandes élastiques 70, 70' et donc la rétention de la housse 1 sur le siège.

Il va de soi que d'autres conformations de la housse 1 sont envisageables sans se départir de l'esprit de l'invention. En particulier, il est possible que les liaisons 50, 50' entre le dossier 2 et l'assise 3 soient conformées de façon détachable. L'intérêt ne serait pas tant la mise en forme de la housse 1 sur le siège que de pouvoir laver la housse en deux parties.

## Revendications

1. Housse de siège (1) en une seule partie, comportant une portion (3) permettant de recouvrir au moins la partie supérieure (30) et les parties latérales (31, 31', 32) de l'assise du siège, et une portion (2) permettant de recouvrir au moins la partie avant (20), la partie arrière (22) et les parties latérales (21, 21') du dossier du siège, comportant une bande élastique (70, 70') de rétention, de la housse (1) sur le siège, agencée pour s'étendre sous l'assise du siège, et des moyens ((40, 41), (40', 41')) de mise en forme et de fermeture de la housse (1) qui viennent également fermer la bande élastique (70, 70') de rétention.

2. Housse (1) selon la revendication 1, dans laquelle les moyens ((40, 41), (40', 41')) de mise en forme et de fermeture de la housse (1) s'étendent sensiblement le long des portions (21, 21', 31, 31', 22) de housse (1) destinées à couvrir les parties latérales du siège.

3. Housse (1) selon la revendication 2, dans laquelle les moyens ((40, 41), (40', 41')) de mise en forme et de fermeture de la housse (1) comportent au moins une fermeture à glissière ((40, 41), (40', 41')).

4. Housse (1) selon la revendication 3, dans laquelle chaque fermeture à glissière ((40, 41), (40', 41')) s'étend de façon sensiblement rectiligne, dans la direction sensiblement suivie par la portion latérale (21, 21') qui la soutient, depuis le sommet (23) de la housse (1) jusqu'au bas.

5. Housse (1) selon l'une des revendications 1 à 4, dans laquelle au moins l'une des portions (2, 3) destinées à recouvrir le dossier ou l'assise du siège possède un bourrelet (24, 33) destiné à être coincé entre le dossier et l'assise du siège.

6. Housse (1) selon l'une des revendications précédentes, dans laquelle les portions (2, 3) destinées à recouvrir le dossier et l'assise du siège sont reliées l'une à l'autre de façon détachable.
